# FASCICULE DE BREVET EUROPEEN

(11) **EP 4 200 651 B1**
(45) Date de publication et mention de la délivrance du brevet: **09.10.2024**
(21) Numéro de dépôt: 21759283.1
(22) Date de dépôt: 10.08.2021
(51) Int. Cl.: G01V 1/40

(54) **METHODE POUR DETERMINER UNE INTERPRETATION EN ELECTROFACIES DE MESURES REALISEES DANS UN PUITS**
VERFAHREN ZUR BESTIMMUNG EINER ELEKTROFACIES-INTERPRETATION VON MESSUNGEN IN EINEM BOHRLOCH
METHOD FOR DETERMINING AN ELECTROFACIES INTERPRETATION OF MEASUREMENTS CARRIED OUT IN A WELL

(30) Priorité: 24.08.2020 FR 2008646
(43) Date de publication de la demande: 28.06.2023
(73) Titulaire: IFP Energies nouvelles, 92500 Rueil-Malmaison (FR)
(72) Inventeur: RASOLOFOSAON, Patrick, 92852 RUEIL-MALMAISON CEDEX (FR); BOUZIAT, Antoine, 92852 RUEIL-MALMAISON CEDEX (FR); COKELAER, Francois, 92852 RUEIL-MALMAISON CEDEX (FR)
(74) Mandataire: IFP Energies nouvelles
(86) Numéro de dépôt international: PCT/EP2021/072277
(87) Numéro de publication internationale: WO 2022/043051

(56) Documents cités:
- US-A1- 2006 074 825
- US-A1- 2013 325 350
- BOUZIAT A. ET AL: "Advanced Interpretation of Wireline Data with Machine Learning Using Multiple Models, Augmented Learning Population and Geology", DIGITAL SUBSURFACE CONFERENCE IN LATIN AMERICA, 1 January 2021 (2021-01-01), pages 1 - 5, XP093130448, DOI: 10.3997/2214-4609.202181001
- SILVA ADRIELLE A. ET AL: "Petrofacies classification using machine learning algorithms", GEOPHYSICS, vol. 85, no. 4, 30 April 2020 (2020-04-30), US, pages WA101 - WA113, XP055802196, ISSN: 0016-8033, DOI: 10.1190/geo2019-0439.1
- EMELYANOVA I. ET AL: "Unsupervised identification of electrofacies employing machine learning", EAGE ANNUAL CONFERENCE & EXHIBITION INCORPORATING SPE EUROPEC, 12 June 2017 (2017-06-12), Netherlands, XP055802168, ISSN: 2214-4609, DOI: 10.3997/2214-4609.201701655
- DUBOIS ET AL: "Comparison of four approaches to a rock facies classification problem", COMPUTERS & GEOSCIENCES, PERGAMON, AMSTERDAM, NL, vol. 33, no. 5, 10 April 2007 (2007-04-10), pages 599 - 617, XP022025373, ISSN: 0098-3004, DOI: 10.1016/J.CAGEO.2006.08.011

## Description

### Domaine technique

La présente invention concerne le domaine de l'interprétation de mesures réalisées dans un puits foré dans une formation souterraine, telles que des mesures diagraphiques réalisées le long d'un puits.

L'invention peut s'appliquer de manière non limitative au domaine de l'exploration et de l'exploitation pétrolière, de la caractérisation d'une formation souterraine en vue d'un stockage géologique d'un fluide tel que du CO₂, le domaine de la surveillance d'un site de stockage géologique d'un fluide, la géothermie ou encore le stockage d'énergie dans le sous-sol. De manière générale, l'invention peut s'appliquer à tout domaine impliquant une étape de caractérisation géologique d'une formation souterraine.

De manière générale, l'exploration et l'exploitation de réservoirs géologiques pétroliers nécessitent d'acquérir une connaissance aussi précise que possible de la géologie souterraine, et ce, afin de fournir de façon efficace une évaluation des réserves, une modélisation de la production, ou de la gestion de l'exploitation. En effet, la détermination de l'emplacement d'un puits de production et/ou d'un puits d'injection au sein d'un gisement d'hydrocarbures, la constitution de la boue de forage, les caractéristiques de complétion, le choix d'un procédé de récupération des hydrocarbures (tel que l'injection d'eau par exemple) et des paramètres nécessaires à la mise en oeuvre de ce procédé (tels que la pression d'injection, le débit de production,...) nécessitent de bien connaître le gisement. La connaissance d'un gisement signifie disposer d'une description aussi précise que possible de la structure, des propriétés pétrophysiques, des propriétés des fluides, etc., du gisement étudié.

Pour acquérir cette connaissance, l'industrie pétrolière allie les mesures sur champ (réalisées in situ, lors de campagnes sismiques, de mesures diagraphiques réalisées dans des puits, de carottages etc.) aux modélisations expérimentales (réalisées au laboratoire) ainsi qu'aux simulations numériques (réalisées au moyen de logiciels). La formalisation de cette connaissance passe ensuite par l'établissement d'une maquette du sous-sol, représentée sur un ordinateur sous la forme d'une représentation maillée et connue sous le terme de modèle géologique.

Ce modèle géologique peut être notamment utilisé (après une mise à l'échelle) dans une simulation d'écoulement (ou simulation de réservoir) pour prédire (ou encore simuler) les écoulements, l'évolution des pressions au sein du réservoir et la production en fluides aux puits forés dans le réservoir. Il est bien clair que la prédiction d'une simulation d'écoulement sera d'autant plus représentative de la réalité des écoulements dans la formation souterraine d'intérêt que le modèle géologique de la formation souterraine est précis. Les diagraphies de puits et l'analyse de carottes prélevées dans des puits permettant d'acquérir des informations locales précises sur les roches traversées par un puits, elles sont particulièrement recherchées pour la construction d'un modèle géologique fiable.

Les diagraphies de puits consistent à mesurer, à l'aide de sondes, les caractéristiques des roches traversées par un puits. Une mesure diagraphique résulte en un enregistrement en fonction de la profondeur (ou le long d'une caractéristique d'une formation géologique traversée par un puits). Parmi les diagraphies de puits, on peut citer par exemple les diagraphies de rayons gamma, soniques, de densité apparente, les diagraphies électriques ou les diagraphies d'imagerie du puits.

Les enregistrements résultant de diagraphies de puits sont ensuite analysés, c'est-à-dire interprétés, le plus souvent de manière conjointe, pour en déduire des caractéristiques des roches. Cette interprétation passe notamment par la recherche, le long de ces enregistrements, des intervalles (c'est-à-dire des ensembles d'échantillons successifs) présentant des caractéristiques similaires. Ces intervalles pour lesquels les caractéristiques sont cohérentes d'un échantillon à l'autre sont appelés électrofaciès.

En général, l'interprétation d'au moins une partie des mesures diagraphiques est réalisée par un expert, qui doit analyser de manière croisée les différents types de mesures diagraphiques. Le résultat d'une telle interprétation est donc subjectif, et peut fortement varier d'un interprétateur à un autre. En outre, un tel processus manuel peut être long et fastidieux, et ne peut raisonnablement s'envisager pour l'ensemble des mesures diagraphiques. Toutefois, la qualité d'une interprétation humaine de mesures diagraphiques est bien souvent supérieure aux interprétations entièrement automatisées mises en oeuvre par ordinateur.

### Technique antérieure

Les documents suivants seront cités dans la suite de la description :
Serra O, Abbott HT (1980) The contribution of logging data to sedimentology and stratigraphy. In: SPE 9270, 55th Technical Conférence, Dallas, TX, 19 pp.
Dubois, M. K., Bohling, G. C., & Chakrabarti, S. (2007). Comparison of four approaches to a rock faciès classification problem. Computers & Geosciences, 33(5), 599-617.
J. C. Dunn (1973): "A Fuzzy Relative of the ISODATA Process and Its Use in Detecting Compact Well-Separated Clusters", Journal of Cybernetics 3: 32-57.
Emelyanova, I., Pervukhina, M., Clennell, M., & Dyt, C. (2017, June). Unsupervised identification of electrofacies employing machine learning. In 79th EAGE Conférence and Exhibition 2017-Workshops (pp. cp-519). European Association of Geoscientists & Engineers. Ch. Fraley and A. E. Raftery (2002). Model-based clustering, discriminant analysis, and density estimation. Journal of the American Statistical Association 97:611:631.
Chris Fraley, A. E. Raftery, T. B. Murphy and L. Scrucca (2012). mclust Version 4 for R: Normal Mixture Modeling for Model-Based Clustering, Classification, and Density Estimation. Technical Report No. 597, Department of Statistics, University of Washington.
Gan, G., Ma, C., & Wu, J. (2007). Data clustering: theory, algorithms, and applications (Vol. 20). Siam.
Genuer, R., & Poggi, J. M. (2018). Chapter 8: Arbres CART et Forêts aléatoires, Importance et sélection de variables. M.-B. Myriam, SG, & TAC (Eds.), Apprentissage Statistique et Données Massives, 295-342.
Halotel, J., Demyanov, V., & Gardiner, A. (2020). Value of Geologically Derived Features in Machine Learning Facies Classification. Mathematical Geosciences, 52(1), 5-29.
Ho, T. K. (1995). Random decision forests. In Proceedings of 3rd international conférence on document analysis and recognition (Vol. 1, pp. 278-282). IEEE.
Jeong, J., Park, E., Emelyanova, I., Pervukhina, M., Esteban, L., & Yun, S. T. (2020). Interpreting the Subsurface Lithofacies at High Lithological Resolution by Integrating Information from Well-Log Data and Rock-Core Digital Images. Journal of Geophysical Research: Solid Earth, 125(2), e2019JB018204.
Niculescu-Mizil, A., & Caruana, R. (2005, August). Predicting good probabilities with supervised learning. In Proceedings of the 22nd international conférence on Machine learning (pp. 625-632).
Seni, G., & Elder, J. F. (2010). Ensemble methods in data mining: improving accuracy through combining prédictions. Synthesis lectures on data mining and knowledge discovery, 2(1), 1-126.

Parmi les méthodes mises en oeuvre par ordinateur pour interpréter en électrofaciès des mesures réalisées dans des puits, on distingue classiquement les méthodes entièrement automatisées, impliquant des méthodes de classification non supervisée, et les méthodes partiellement automatisées, impliquant des méthodes de classification supervisée. Contrairement à une méthode de classification non supervisée, une méthode de classification supervisée vise à regrouper des échantillons en classes homogènes en tenant compte de règles prédéfinies déterminées à partir d'une d'information d'apprentissage. Il est classique dans l'art antérieur que l'information d'apprentissage requise par les méthodes de classification supervisée provienne d'une interprétation réalisée manuellement par un expert (c'est pour cela que l'on parle méthode semi-automatisée), d'au moins un sous-ensemble des mesures de puits. Une interprétation en électrofaciès issue d'une méthode de classification supervisée est alors généralement plus réaliste géologiquement qu'une interprétation en électrofaciès issue d'une méthode de classification non supervisée, car tenant compte d'une pré-interprétation réalisée par un spécialiste.

Parmi les méthodes d'interprétation en électrofaciès entièrement automatisées, on connait le document (Emelyanova, et al., (2017)).

Le procédé décrit dans ce document combine trois méthodes de classification non supervisée pour trouver un consensus de classification. Autrement dit, le procédé décrit dans ce document applique trois méthodes de classification automatique non supervisée à des données de diagraphies de puits pour déterminer trois interprétations en électrofaciès, et détermine une interprétation en électrofaciès finale à partir de cette pluralité d'interprétations par la majorité des votants. Par ailleurs la qualité de la prédiction est quantifiée par la proportion de votes majoritaires rapportée au nombre total de votants. Toutefois, ce document ne décrit pas la prise en compte d'un critère, pouvant être de type géologique, pour déterminer son interprétation finale. De plus, le procédé décrit dans ce document ne propose pas d'encore améliorer son interprétation finale.

On connait également le document (Halotel, et al., 2020) qui décrit l'intérêt de la prise en compte d'informations de type géologique dans des méthodes de classification supervisée pour améliorer l'interprétation en faciès de diagraphies de puits, comparé à des méthodes de classification qui seraient uniquement pilotées par les données ('date-driven classifiers'). Plus précisément, ce document décrit des contraintes reposant sur des analyses préalables avancées, telles qu'une analyse des cycles stratigraphiques, des types de dépôts (marins ou non marins), ou encore telles que des analyses pétrophysiques pour déterminer la taille de grain, la taille de pores, le contenu en argile, etc. Or ces analyses géologiques et/ou pétrophysiques nécessitent une expertise certaine (d'un sédimentologiste et d'un pétrophysicien respectivement) et sont en général très rarement disponibles au moment de la phase d'interprétation en électrofaciès de données diagraphiques. De plus, le procédé décrit dans ce document ne propose pas d'affiner l'interprétation en élecrofacies issue d'une première classification, ni de combiner différentes méthodes de classification pour aboutir à un consensus de classification.

On connait en outre le document (Jeong et al. 2020) qui décrit la combinaison d'une méthode de classification automatique non supervisée d'images de carottes et une méthode de classification supervisée de données de puits par un réseau multi-couches de neurones pour une classification automatique en lithofaciès améliorée. Plus précisément, le procédé décrit dans ce document utilise une classification obtenue par une méthode de classification non supervisée appliquée à des images de carottes pour créer une information d'apprentissage destinée à une méthode de classification supervisée appliquée à des données diagraphiques. Ainsi, dans ce procédé, l'information d'apprentissage est obtenue à partir des seules portions du puits pour lesquelles on dispose de carottes, et qui plus est d'images de carottes. Dans la pratique, on ne dispose pas de carottes sur toute la longueur du puits pour laquelle on dispose de relevés diagraphiques. Par ailleurs, les carottes sont prélevées dans des zones préférentielles du puits (autrement dit ne sont pas prélevées aléatoirement). Par exemple, par opposition aux zones réservoir, les zones de couvertures argileuses sont rarement ou peu carottées (car leurs propriétés pétrophysiques sont moins recherchées). Ainsi, l'information d'apprentissage décrite dans ce document n'est pas forcément représentative de l'ensemble des classes d'électrofaciès présentes dans le puits, ce qui peut nuire au résultat de la classification supervisée mise en oeuvre par la suite. Notamment le résultat de la classification supervisée est de facto limité par le nombre de classes issue de la classification non supervisée, ce qui peut conduire à une interprétation en électrofaciès des mesures diagraphiques erronée. Par ailleurs, le procédé décrit dans ce document met en oeuvre une seule méthode de classification supervisée, à savoir un réseau multi-couches de neurones pour déterminer les lithofaciès à toutes les profondeurs, y compris celles non carottées. Ainsi, ce document n'enseigne pas de combiner différentes méthodes de classification supervisée pour aboutir à un consensus de classification.

On connait également le document (Dubois et al, 2007) qui compare quatre méthodes de classification conventionnelle supervisée en électrofaciès de diagraphies de puits sur le même jeu de données. Toutefois, le procédé décrit dans ce document ne décrit pas l'utilisation d'un critère, pouvant être de type géologique, pour affiner une classification. De plus, le procédé décrit dans ce document ne propose pas d'affiner l'interprétation en électrofaciès issue d'une première classification, ni de combiner différentes méthodes de classification pour aboutir à un consensus de classification. Enfin, ce document ne décrit pas la quantification de la probabilité d'un point d'appartenir à une classe.

On connait en outre le document US 2002/0052690 qui décrit l'application de méthodes de classification supervisée pour déterminer une interprétation en électrofaciès de diagraphies de puits. Par ailleurs, ce document décrit une quantification de la probabilité d'un point d'appartenir à une classe. Toutefois, ce document ne décrit pas la prise en compte d'un d'un critère, pouvant être de type géologique, pour affiner une classification. De plus, le procédé décrit dans ce document ne propose pas d'affiner l'interprétation en électrofaciès issue d'une première classification, ni de combiner différentes méthodes de classification pour aboutir un consensus de classification.

Ainsi, les procédés décrits dans l'art antérieur décrivent soit des méthodes pouvant être entièrement automatisée mais pouvant conduire à des interprétations en électrofaciès non géologiquement plausibles ou erronées, soit des méthodes partiellement automatisées, nécessitant la création d'informations d'apprentissage par un expert, ce qui conduit à une interprétation en électrofaciès plus réaliste mais subjective.

La présente invention vise à pallier ces inconvénients. Notamment, le procédé selon l'invention permet de s'affranchir de la nécessité de disposer d'une interprétation en électrofaciès, réalisée manuellement par un expert, ce qui est un processus long et fastidieux, pour entrainer des méthodes de classification automatique.

Au contraire, le procédé selon l'invention peut être entièrement automatisé. Notamment le procédé selon l'invention permet de générer de manière automatique une information d'apprentissage, choisie parmi une pluralité de prédictions, sur la base de critères pouvant être de type géologique. De plus, le procédé selon l'invention repose sur l'association de plusieurs algorithmes d'apprentissage pour obtenir de meilleures performances prédictives, ainsi qu'une quantification de la qualité de la prédiction.

### Résumé de l'invention

L'invention concerne un procédé pour déterminer une interprétation en électrofaciès de mesures relatives à au moins une portion d'au moins un puits traversant une formation souterraine

Le procédé selon l'invention comprend au moins les étapes suivantes :
A) on réalise une pluralité de mesures relatives à au moins ladite portion dudit au moins un puits traversant ladite formation souterraine, ladite pluralité desdites mesures résultant au moins d'une diagraphie de puits et/ou d'une image d'au moins une carotte prélevée dans ledit au moins un puits ;
B) on applique une première pluralité de méthodes de classification à ladite pluralité desdites mesures relatives à au moins ladite portion dudit au moins un puits et on détermine une première pluralité de classifications en électrofaciès de ladite pluralité desdites mesures relatives à au moins ladite portion dudit au moins puits, lesdites méthodes de classification étant des méthodes de classification non supervisée ou, si on dispose d'informations d'apprentissage pour au moins un sous-ensemble de ladite pluralité desdites mesures relatives à ladite au moins ladite portion dudit au moins un puits, des méthodes de classification supervisées entrainées sur lesdites informations d'apprentissage ;
C) parmi ladite première pluralité de classifications en électrofaciès de ladite pluralité desdites mesures relatives à au moins ladite portion dudit au moins puits, on sélectionne une classification en électrofaciès de référence selon un critère prédéfini, et on sélectionne une portion de ladite classification en électrofaciès de référence ;
D) on applique une deuxième pluralité de méthodes de classification à ladite pluralité desdites mesures relatives à au moins ladite portion dudit au moins un puits et on détermine une deuxième pluralité de classifications en électrofaciès de ladite pluralité desdites mesures relatives à au moins ladite portion dudit au moins puits, lesdites méthodes de classification étant des méthodes de classification supervisées entrainées sur ladite portion de ladite classification en électrofaciès de référence ;
E) on détermine ladite interprétation en électrofaciès de ladite pluralité desdites mesures relatives à au moins ladite portion dudit au moins un puits à partir de ladite deuxième pluralité de classifications en électrofaciès de ladite pluralité desdites mesures relatives à au moins ladite portion dudit au moins un puits, ladite détermination étant réalisée au moyen d'une méthode d'apprentissage ensembliste.

Selon une mise en oeuvre de l'invention, on peut choisir ladite au moins une diagraphie de puits parmi les diagraphies de rayons gamma, les diagraphies soniques, les diagraphies de densité, les diagraphies électriques ou encore les diagraphies d'imagerie du puits.

Selon une mise en oeuvre de l'invention, ladite première pluralité de méthodes de classification non supervisée peut comprendre au moins cinq types de méthodes de classification non supervisée, de préférence huit types méthodes de classification non supervisée.

Selon une mise en oeuvre de l'invention, on peut choisir au moins une méthode de classification non supervisée de ladite première pluralité de méthodes de classification non supervisée parmi la liste suivante : la méthode de partitionnement des données basé sur des modèles, la méthode de partitionnement flou des données, la méthode de partitionnement hiérarchique en K-moyennes, la méthode de partitionnement des données basé sur la densité.

Selon une mise en oeuvre de l'invention, ladite première et/ou deuxième pluralité de méthodes de classification supervisée peut comprendre au moins cinq types méthodes de classification supervisée, de préférence huit types de méthodes de classification supervisée.

Selon une mise en oeuvre de l'invention, on peut choisir au moins une méthode de classification supervisée de ladite première et/ou deuxième pluralité de méthodes de classification supervisée parmi la liste suivante : la classification et régression par arbre de décision, une classification de type forêt aléatoire, les machines à vecteur de support, l'ensachage de modèles d'arbres décisionnels, l'analyse discriminante linéaire, le mélange d'analyses discriminantes, la méthode des k plus proches voisins.

Selon une mise en oeuvre de l'invention, ladite sélection de ladite classification en électrofaciès de référence selon un critère prédéfini peut consister à sélectionner ladite classification de ladite première pluralité de classifications en électrofaciès présentant au moins le moins de changements de classes le long d'au moins ladite portion dudit au moins un puits.

Selon une mise en oeuvre de l'invention, à l'étape A), on peut réaliser une pluralité de mesures pour au moins un puits supplémentaire et/ou pour au moins une portion supplémentaire dudit puits, et on peut appliquer les étapes B) et C) uniquement à ladite portion dudit puits, et on peut appliquer les étapes D) et E) à ladite portion dudit puits ainsi qu'audit puits supplémentaire et/ou à ladite portion supplémentaire dudit puits.

Selon une mise en oeuvre de l'invention, ladite portion de ladite classification en électrofaciès de référence peut comprendre entre 20 et 30% des échantillons de ladite classification en électrofaciès de référence.

Selon une mise en oeuvre de l'invention, on peut sélectionner lesdits échantillons de ladite portion de ladite classification en électrofaciès de référence de manière aléatoire.

Selon une mise en oeuvre de l'invention, ladite méthode d'apprentissage ensembliste peut être la méthode du vote majoritaire.

L'invention concerne en outre un procédé pour exploiter un fluide présent dans une formation souterraine, comprenant la mise en oeuvre du procédé pour déterminer une interprétation en électrofaciès de mesures relatives à au moins une portion d'au moins un puits traversant une formation souterraine tel que décrit ci-dessus.

Selon une mise en oeuvre de l'invention, à partir au moins de ladite interprétation en électrofaciès des mesures relatives à au moins ladite portion d'au moins ledit puits traversant ladite formation souterraine, on peut construire une représentation maillée représentative de ladite formation souterraine, on peut déterminer au moins un schéma d'exploitation dudit fluide présent dans ladite formation souterraine à partir au moins de de ladite représentation maillée représentative de ladite formation souterraine, et on peut exploiter ledit fluide de ladite formation souterraine en fonction dudit schéma d'exploitation.

Selon une mise en oeuvre de l'invention, ledit schéma d'exploitation dudit fluide peut comprendre au moins une implantation d'au moins un puits injecteur et/ou d'au moins un puits producteur, et on peut forer lesdits puits de ladite implantation et on peut les équiper d'infrastructures de production.

### Liste des figures

La figure 1A présente un relevé de mesure diagraphique de type radioactivité naturelle ainsi qu'une interprétation en électrofaciès réalisée manuellement par un spécialiste pour un exemple d'application du procédé selon l'invention.
La figure 1B présente une interprétation en électrofaciès et ses incertitudes associées, déterminées au moyen d'une mise en oeuvre du procédé selon l'invention appliqué à l'exemple d'application de la figure 1A.
La figure 2 présente une interprétation en électrofaciès et ses incertitudes associées, déterminées au moyen d'un procédé selon l'art antérieur appliqué à l'exemple d'application de la figure 1A.

### Description des modes de réalisation

Selon un premier aspect, l'invention concerne un procédé pour déterminer une interprétation en électrofaciès de mesures relatives à au moins une portion d'au moins un puits traversant une formation souterraine.

Selon un deuxième aspect, l'invention concerne un procédé pour exploiter un fluide présent dans une formation souterraine, le procédé selon le deuxième aspect comprenant la mise en oeuvre du procédé pour déterminer une interprétation en électrofaciès des mesures relatives à au moins une portion d'au moins un puits selon le premier aspect de l'invention.

Selon l'invention, la pluralité de mesures relatives à au moins une portion d'au moins un puits résultent au moins d'une diagraphie de puits et/ou d'une image d'au moins une carotte prélevée dans le puits considéré, au niveau de la au moins une portion de puits considérée. Selon une mise en oeuvre de l'invention, la formation souterraine d'intérêt peut comprendre un réservoir pétrolier, avec de préférence sa couverture.

Selon l'invention, le puits traversant la formation souterraine d'intérêt peut être de géométrie quelconque, et notamment être un puits vertical ou encore dévié. On parle alors de trajectoire du puits.

Par électrofaciès, on entend un regroupement d'échantillons de la pluralité de mesures (par exemple diagraphiques) ayant des valeurs (de mesures) homogènes. Autrement dit, deux échantillons des mesures (par exemple diagraphiques) appartiennent au même groupe, ou 'électrofaciès', si leurs réponses (par exemple diagraphiques), autrement dit si les mesures (par exemple diagraphiques) faites en ces points, ne diffèrent pas sensiblement. La notion d'électrofaciès a été introduite notamment dans le document (Serra and Abbot,1980). La détermination des différents électrofaciès peut être vue comme la recherche à la fois de la maximisation des différences entre les réponses (par exemple diagraphiques) en deux points quelconques appartenant à deux électrofaciès différents, et de la minimisation des différences entre les réponses (par exemple diagraphiques) de deux points quelconques appartenant au même électrofaciès.

Par interprétation en électrofaciès de mesures relatives à un puits, on entend une classification (ou encore un partitionnement) en électrofaciès des échantillons se situant le long de la trajectoire du puits pour lesquels on dispose de mesures. Autrement dit, à l'issue d'une interprétation en électrofaciès, une classe est attribuée à chacun des échantillons se situant le long de la trajectoire du puits pour lesquels on dispose de mesures. Une classe d'électrofaciès, est un label ou étiquette, qui peut être n'importe quelle chaine de caractère non signifiante (par exemple la classe 'C0', la classe 'C1') ou signifiante (par exemple 'grès', 'argile', 'calcaire'), une couleur, ou simplement un symbole (par exemple '*', '+', '%' ...) etc. Ce label ou étiquette n'est pas une grandeur quantitative par opposition à des grandeurs telles des nombres respectant une relation d'ordre (i.e. infériorité, supériorité, égalité) En particulier, lorsque l'on dispose d'une interprétation en électrofaciès réalisée par un spécialiste, au moins pour certains échantillons le long d'au moins une portion d'au moins un puits, une classe d'électrofaciès peut être une chaine de caractère représentative d'un type lithologique (par exemple `grès', 'calcaire', 'argile', etc.). On parle alors de lithofacies.

De manière générale, le procédé selon l'invention comporte au moins les étapes suivantes :
1. Acquisition de mesures relatives à au moins une portion d'au moins un puits
2. Application d'une pluralité de méthodes de classification supervisée ou non supervisée
3. Sélection d'une classification en électrofaciès de référence
4. Application d'une pluralité de méthodes de classification supervisée
5. Détermination de l'interprétation en électrofaciès
6. Exploitation d'un fluide présent dans la formation souterraine

Le procédé selon le premier aspect de l'invention comprend au moins les étapes 1 à 5 décrites ci-après.

Le procédé selon le deuxième aspect de l'invention comprend en outre au moins l'étape 6 décrite ci-après.

Les étapes 2 à 5 peuvent être mises en oeuvre par des moyens informatiques, tel qu'un ordinateur.

Les différentes étapes du procédé selon l'invention sont détaillées ci-après.

Selon l'invention, les étapes du procédé selon l'invention sont appliquées à au moins une portion d'au moins un puits traversant la formation souterraine. Selon une mise en oeuvre de l'invention, les étapes 1, 4 et 5 peuvent en outre être appliquées à un autre puits traversant la formation souterraine d'intérêt et/ou à une autre portion du puits (par exemple d'autres intervalles le long de la trajectoire du puits) pour lequel les étapes 2 et 3 ont été appliquées. De cette façon, et comme cela est décrit ci-après, on peut exploiter l'information d'apprentissage déterminée pour au moins une portion d'au moins un puits à l'issue des étapes 2 et 3 à d'autres portions du puits et/ou d'autres puits.

### 1. Acquisition de mesures relatives à un puits

Au cours de cette étape, on réalise une pluralité de mesures relatives à au moins une portion d'au moins un puits traversant la formation souterraine d'intérêt, la pluralité de mesures résultant au moins d'une diagraphie de puits et/ou d'une image d'au moins une carotte prélevée dans le puits considéré.

Selon une mise en oeuvre de l'invention, l'au moins une diagraphie de puits peut être choisie parmi les diagraphies de rayons gamma, les diagraphies soniques, les diagraphies de densité, les diagraphies électriques ou encore les diagraphies d'imagerie de la paroi du puits. Avantageusement, on réalise au moins cinq diagraphies différentes pour une même portion d'un même puits. La multiplicité des différents types de diagraphie permet une interprétation plus fiable en électrofaciès, par redondance de l'information qui peut être déduite de chaque type de diagraphie.

Comme bien connu, l'acquisition d'une diagraphie de puits est réalisée au moyen d'une sonde qui se déplace le long de la trajectoire (d'au moins une portion, typiquement de quelques kilomètres) du puits et qui réalise une mesure d'un propriété (par exemple la densité, la radioactivité naturelle, la résistivité, etc.) de la roche environnant le puits pour une succession de pas d'échantillonnage (de l'ordre de la dizaine de cm). Ainsi, une mesure diagraphique résulte en une série d'échantillons (typiquement quelques milliers à une dizaine de milliers de points de mesures) le long de la trajectoire du puits considéré, chaque échantillon comportant au moins une valeur d'une propriété (par exemple la densité, la radioactivité naturelle, la résistivité, etc.) de la roche environnante.

Selon une mise en oeuvre de l'invention, les diagraphies de puits peuvent subir des prétraitements, tels que des ré-échantillonnages bien connus de l'homme du métier, de manière à ce que les diagraphies de puits de différents types soient "replacées" aux mêmes points de mesure le long de la trajectoire du puits.

Selon l'invention, l'au moins une image d'au moins une carotte prélevée dans au moins un puits est obtenue par un dispositif d'imagerie, comme par exemple une imagerie scanner ou toute autre technique d'imagerie. De préférence, l'image de la carotte prélevée peut être prétraitée, par exemple par une analyse texturale, pour déterminer au moins une mesure d'une propriété recherchée (par exemple le pendage des couches) pour une série d'échantillons le long de la trajectoire du puits. Avantageusement, et lorsqu'une image de carotte est utilisée conjointement avec au moins une diagraphie de puits, un ré-échantillonnage peut être réalisé de manière à ce que les séries d'échantillons des images de la carotte et de la diagraphie de puits soient concordants en termes d'emplacement des points de mesure. On peut trouver des informations sur les méthodes de traitement d'images de carottes par exemple dans le document (Jeong et al., 2020).

A l'issue de cette étape, on obtient au moins deux types de mesures réalisées dans un puits, c'est-à-dire des mesures issues d'au moins une diagraphie de puits et/ou d'une image d'une carotte, pour une succession d'échantillons le long d'au moins une portion de la trajectoire d'au moins un puits traversant la formation souterraine d'intérêt.

### 2. Application d'une pluralité de méthodes de classification supervisée ou non supervisée

Au cours de cette étape, on applique une pluralité de méthodes de classification, supervisée ou non supervisée, à la pluralité de mesures relatives à au moins une portion d'au moins un puits issues de l'étape précédente pour déterminer une pluralité de classifications en électrofaciès de cette pluralité mesures. Selon l'invention, l'application d'une pluralité de méthodes de classification supervisée requiert de disposer d'une information d'apprentissage pour un sous-ensemble de ladite au moins une portion dudit au moins un puits.

Selon une mise en oeuvre de l'invention, même si des mesures ont été réalisées pour plusieurs puits et/ou pour plusieurs portions d'un puits à l'étape 1, cette étape peut être mise en oeuvre pour au moins une portion d'au moins un puits.

Nous détaillons ci-après les deux variantes principales du procédé selon l'invention, mettant en oeuvre soit une pluralité de méthodes de classification supervisée (première variante), soit une pluralité de méthodes de classification non supervisée (seconde variante).

### 2.1 Première variante : application d'une pluralité de méthodes de classification supervisée

De manière générale, une méthode de classification supervisée ("classification" en anglais) est une méthode qui recherche à regrouper des échantillons en classes homogènes et distinctes entre elles, en tenant compte de règles prédéfinies de classement (ou encore d'un modèle) déterminées à partir d'une d'information d'apprentissage. On parle aussi d'entrainement d'une méthode de classification supervisée au moyen d'une information d'apprentissage.

L'information d'apprentissage selon cette variante de l'invention consiste en une identification préalable de classes (réalisée par exemple par un spécialiste de manière manuelle ou par toute autre méthode et notamment par toute méthode automatique) pour au moins un sous-ensemble (ou encore une partie, ou encore une portion) des échantillons à classifier par la méthode de classification supervisée. Par exemple, un spécialiste en géosciences peut avoir, à partir d'une analyse manuelle des diagraphies, identifié des classes distinctes et déterminé des classes pour un au moins sous-ensemble des échantillons. De manière classique, si cette information d'apprentissage est construite manuellement par un spécialiste, elle peut représenter environ 10% des échantillons à classifier. En effet, une interprétation manuelle de diagraphies classiques (comportant des milliers à des dizaines de milliers d'échantillons) est souvent longue et fastidieuse, et il n'est pas réaliste d'obtenir, de manière manuelle, une identification d'une classe pour chaque échantillon à classifier.

De manière générale, une méthode de classification supervisée ne nécessite pas de préciser un nombre de classes dans lesquels regrouper les échantillons, le nombre de classes étant celui déterminé par un spécialiste sur les échantillons ayant été considérés pour construire l'information d'apprentissage.

Selon cette variante de l'invention selon laquelle l'étape courante est appliquée au moyen de méthodes de classification supervisée, on applique à cette étape au moins deux méthodes de classification supervisée, de préférence au moins cinq méthodes de classification supervisée, et de manière très préférée au moins huit méthodes de classification supervisée. Il est bien clair que les méthodes de classification supervisée dont il est question ici sont de différents types. Plus le nombre (de types) de méthodes de classification supervisée appliquées à cette étape est grand, et plus la classification en électrofaciès obtenue à l'issue du procédé selon la première variante de l'invention est fiable.

Selon une mise en oeuvre de cette variante de l'invention, on peut choisir au moins une des méthodes de classification supervisée appliquées au cours de cette étape parmi les méthodes suivantes : la classification et régression par arbre de décision (en anglais 'Classification and Regression Tree (CART)'), une classification de type forêt aléatoire (en anglais 'random forest') ou sa variante en calcul parallèle (en anglais `parallele random forest'), les machines à vecteur de support (en anglais 'support vector machine'), l'ensachage de modèles d'arbres décisionnels (en anglais 'Bagged CART'), l'analyse discriminante linéaire (en anglais 'Discriminant Analysis') ou sa variante appelée mélange d'analyses discriminantes (en anglais 'Mixture Discriminant Analysis'), la méthode des k plus proches voisins (en anglais 'k-nearest neighbors'). On peut trouver une description de ces méthodes par exemple dans le document (Gan et al., 2007).

De manière préférée, au cours de cette étape, on peut appliquer au moins une classification de type forêt d'arbres décisionnels aussi appelée forêt aléatoire (en anglais 'random decision forest' ou `random forest') et l'ensachage de modèles d'arbres décisionnels (en anglais 'Bagged CART'). Il s'agit en effet de deux méthodes qui s'avèrent parmi les plus performantes pour réaliser une classification supervisée, notamment de mesures réalisées dans un puits telles que des diagraphies de puits et/ou des images de carottes.

On peut trouver une description de la méthode de la forêt aléatoire (en anglais 'random forest') par exemple dans le document (Ho, 1995). La méthode de la forêt aléatoire est une méthode d'apprentissage automatique qui combine de manière aléatoire un grand nombre d'arbres décisionnels. Deux types d'aléas sont introduits. D'une part, chaque arbre décisionnel est construit sur un échantillon aléatoire à partir des données d'origine. D'autre part, à chaque noeud d'arbre décisionnel, un sous-ensemble d'entités (en anglais 'features', c'est-à-dire les différents types de mesures diagraphiques et/ou les images de carottes pour l'application du procédé selon l'invention) est choisi aléatoirement pour générer la meilleure répartition. Les données d'entrée sont les mesures (diagraphiques et/ou images de carottes) relatives à au moins la portion du au moins un puits et le nombre de classes choisies. En sortie, on obtient pour chaque échantillon la classe d'appartenance. Outre ses performances, l'autre attrait pour cette méthode vient du nombre réduit de paramètres ajustés automatiquement, en l'occurrence 2, à savoir le nombre d'arbres décisionnels et le nombre d'entités à choisir à chaque noeud d'arbre décisionnel pour générer la meilleure répartition.

On peut trouver une description de la méthode de l'ensachage d'arbres décisionnels (en anglais 'Bagged CART', où CART est l'acronyme de 'Classification and Regression Trees') par exemple dans le document (Genuer et Poggi, 2018). La méthode de l'ensachage d'arbres décisionnels fait intervenir, comme la méthode de la forêt aléatoire, des arbres décisionnels. Cette méthode repose en plus sur le 'Bagging' ('ensachage' en français), qui est un cas particulier des méthodes de calcul de modèle moyen. Les données d'entrée sont les mesures (diagraphiques et/ou images de carottes) relatives à au moins la portion du au moins un puits considéré et le nombre de classes choisies. En sortie, on obtient pour chaque échantillon la classe d'appartenance. Contrairement à la méthode de la forêt aléatoire, un seul paramètre est ajusté automatiquement, à savoir le nombre d'arbres décisionnels.

### 2.2 Deuxième Variante : application d'une pluralité de méthodes de classification non supervisée

De manière générale, une méthode de classification non supervisée est une méthode qui recherche une partition, ou encore une segmentation, d'un ensemble d'échantillons en classes homogènes et distinctes entre elles. On parle aussi de "'clustering" en anglais ou encore de "labellisation". Contrairement à une méthode de classification supervisée, une méthode de classification non supervisée n'est pas entrainée par une information d'apprentissage.

De manière classique, une méthode de classification non supervisée requiert en entrée un nombre de classes. Avantageusement, le nombre de classes en entrée de la pluralité de méthodes de classification non supervisée vaut au moins cinq, de manière préférée dix. Plus le nombre de classes est important, plus la classification en électrofaciès est détaillée. L'homme du métier sait choisir un nombre de classes adapté à la caractérisation d'une formation souterraine particulière.

Selon cette variante de l'invention selon laquelle l'étape courante est appliquée au moyen d'une pluralité de méthodes de classification non supervisée, on applique au moins deux méthodes de classification non supervisée, de préférence au moins quatre méthodes de classification non supervisée, et de manière très préférée au moins six méthodes de classification non supervisée. Il est bien clair que les méthodes de classification non supervisée dont il est question ici sont de différents types. Plus le nombre (de types) de méthodes de classification non supervisée appliquées à cette étape est grand, et plus la classification en électrofaciès à l'issue du procédé selon le premier aspect de l'invention est fiable.

Selon une mise en oeuvre de cette variante de l'invention, on peut choisir au moins une des méthodes de classification non supervisée appliquées au cours de cette étape parmi la méthode de partitionnement des données basé sur des modèles (en anglais ' Model-based clustering'), la méthode de partitionnement flou des données (en anglais 'Fuzzy clustering'), la méthode de partitionnement hiérarchique en K-moyennes (en anglais ' Hierarchical K-means clustering'), la méthode de partitionnement des données basé sur la densité (en anglais ' Density-based clustering'), la méthode de Partitionnement Spectral (en anglais `Spectral Clustering') ou la méthode de Carte auto-adaptative (en anglais `Self-Organizing Map').

De manière préférée, au cours de cette étape, on peut appliquer au moins la méthode de partitionnement des données basé sur des modèles (en anglais ' Model-based clustering') et/ou la méthode de partitionnement flou des données (en anglais 'Fuzzy clustering'). Il s'agit en effet de deux méthodes qui s'avèrent parmi les plus performantes pour réaliser une classification automatique, notamment de mesures de type diagraphique et/ou d'image de carottes.

On peut trouver une description de la méthode de partitionnement flou des données par exemple dans le document (Dunn, 1973). A l'issue d'une méthode de partitionnement des données classiques, on connait l'appartenance à une classe donnée de chaque échantillon. Dans le partitionnement flou des données, l'appartenance d'un échantillon à une classe est moins rigide. Plus exactement à chaque échantillon est associé un nombre compris entre 0 et 1 pour chaque classe. Plus ce nombre est proche de 1 (respectivement 0) plus l'échantillon est proche (respectivement loin) du centre de l'amas de points correspondant à la classe considérée. Aussi, ce nombre quantifie d'une certaine façon le degré d'appartenance de l'échantillon à la classe considérée. Les données d'entrée sont les mesures réalisées à l'étape 1 (diagraphiques et/ou les images de carottes) et le nombre de classes choisies. En sortie est déduit pour chaque échantillon le vecteur des degrés d'appartenance à chacune des classes. La classe choisie pour l'échantillon est celle pour lequel le degré d'appartenance est le plus élevé.

On peut trouver une description de la méthode de partitionnement des données basé sur des modèles par exemple dans le document (Fraley et Raftery, 2002). Pour cette méthode, l'appartenance d'un échantillon à une classe n'est également, comme dans la méthode du partitionnement flou des données, pas rigide. Toutefois, contrairement à cette dernière méthode, un vrai modèle statistique est utilisé dans la méthode de partitionnement des données basé sur des modèles. Plus exactement, à chaque échantillon est associée une probabilité d'appartenir à une classe. Ainsi, en pratique chaque échantillon est considéré comme issu d'une distribution qui est un mélange de deux ou plusieurs composantes. Chaque composante (ou classe) est associée à un amas de points, est décrit par une fonction de densité de probabilité, et a un poids associé dans ce mélange. Cette fonction, qui pourrait être choisie arbitrairement, est choisie par simplicité sous forme d'une fonction de distribution Gaussienne normale multivariée. Les données d'entrée sont les mesures (diagraphiques et/ou images de carottes) relatives à au moins la portion du au moins un puits considéré et le nombre de classes choisies. En sortie, est déduite la probabilité d'appartenance à chacune des classes pour chaque échantillon. La classe choisie pour l'échantillon est celle pour lequel la probabilité d'appartenance est la plus élevée.

Ainsi, à l'issue de cette étape, on obtient une classe pour chacun des échantillons de la pluralité de mesures réalisées le long au moins d'une portion d'au moins un puits traversant la formation souterraine d'intérêt, et ce pour chacune des méthodes de classification, supervisée ou non supervisée, appliquées aux mesures diagraphiques et/ou aux images de puits. Autrement dit, à l'issue de cette étape, on obtient une pluralité de classifications en électrofaciès, plus précisément, une classification en électrofaciès pour chaque méthode de de classification, non supervisée ou supervisée, appliquée. Par la suite, on parle de "première pluralité de classifications en électrofaciès" des mesures réalisées dans au moins portion d'au moins un puits. On pourrait aussi parler d'une "première pluralité d'interprétations en électrofaciès intermédiaires", une interprétation en électrofaciès (finale) étant l'objectif du procédé selon le premier aspect de l'invention et est obtenue issue de l'étape 5 décrite ci-après.

### 3. Sélection d'une classification en électrofaciès de référence

Au cours de cette étape, il s'agit de sélectionner, parmi la première pluralité de classifications en électrofaciès issue de la précédente étape, une classification en électrofaciès que l'on appelle par la suite "classification en électrofaciès de référence", puis de sélectionner une portion de cette classification en électrofaciès de référence. Par "portion de classification", on entend un sous-ensemble des échantillons de la au moins une portion d'au moins un puits pour lesquels une classification en électrofaciès a été déterminée à l'étape 2.

Selon l'invention, la sélection d'une classification en électrofaciès de référence est choisie parmi la première pluralité de classifications en électrofaciès selon un critère prédéfini.

Selon une mise en oeuvre de l'invention, la sélection d'une classification en électrofaciès de référence selon un critère prédéfini peut consister à sélectionner, parmi la première pluralité de classifications en électrofaciès issue de la précédente étape, celle pour laquelle au moins le nombre de changement de classes le long de la au moins une portion du au moins un puits est le plus faible. Autrement dit, on cherche la classification en électrofaciès la plus stable le long du puits. Cela reflète la réalité géologique : les propriétés des roches qui constituent une formation souterraine sont globalement stables sur des intervalles correspondant à des mêmes dépôts sédimentaires.

Par ailleurs, selon l'invention, on sélectionne une portion de la classification en électrofaciès de référence, c'est-à-dire une portion des échantillons de la classification en électrofaciès de référence. Selon une mise en oeuvre de l'invention, on sélectionne entre 10% et 40% des échantillons de la classification en électrofaciès de référence, de manière préférée, entre 20 et 30%. Le nombre d'échantillons de la classification en électrofaciès de référence sélectionnés est utilisé dans l'étape suivante en tant qu'information d'apprentissage pour une application d'une pluralité de méthodes de classification supervisée. Le nombre d'échantillons choisi doit permettre de laisser une flexibilité à ces méthodes de classification supervisée de s'écarter de ce modèle tout en étant guidées par cette information d'apprentissage. Cet objectif est en particulier atteint avec un nombre d'échantillons compris entre 20 et 30%.

De manière très préférée, la sélection d'une portion des échantillons de la classification en électrofaciès de référence est réalisée de manière aléatoire. En effet, il est de cette manière plus probable d'échantillonner l'ensemble des classes de la classification en électrofaciès de référence, car la classification en électrofaciès de référence n'est au contraire pas organisée de manière aléatoire.

Ainsi, à l'issue de cette étape, on obtient une information d'apprentissage destinée à être utilisée dans la suite du procédé selon l'invention. Cette information d'apprentissage n'a pas été constituée manuellement par un spécialiste, mais de manière entièrement automatique. Cette information d'apprentissage peut qui plus est avoir été déterminée au moyen d'un critère se basant sur des considérations géologiques, de manière à ce que l'information d'apprentissage soit géologiquement plausible.

### 4. Application d'une pluralité de méthodes de classification supervisée

Au cours de cette étape, on applique une pluralité de méthodes de classification supervisée à la pluralité de mesures relatives à au moins une portion d'au moins un puits issues de l'étape 1 pour déterminer une deuxième pluralité de classifications en électrofaciès de ces mesures, les méthodes de classifications supervisée étant entrainées sur la portion des échantillons de la classification en électrofaciès de référence sélectionnée à l'étape précédente comme information d'apprentissage. On parle ici de deuxième pluralité de classifications en électrofaciès car une première pluralité de classifications en électrofaciès a été obtenue à l'issue de l'étape 2 décrite ci-dessus. On pourrait aussi parler d'une "deuxième pluralité d'interprétations en électrofaciès intermédiaires", une interprétation en électrofaciès "finale" étant l'objectif du procédé selon le premier aspect de l'invention, obtenue issue de l'étape 5 décrite ci-après.

Le principe des méthodes de classification supervisée est décrit de manière générale dans la section 2.1 ci-dessus.

Avantageusement, on peut entrainer les méthodes de classification supervisée sur des mesures diagraphiques supplémentaires effectuées aux mêmes points de mesure que ceux considérés aux étapes 2 à 3 précédentes pour construire une information d'apprentissage. Inclure d'autres types de mesures diagraphiques supplémentaires tend à améliorer le processus d'apprentissage supervisé.

Selon l'invention, on applique à cette étape au moins deux méthodes de classification supervisée, de préférence au moins cinq méthodes de classification supervisée, et de manière très préférée au moins huit méthodes de classification supervisée. Il est bien clair que les méthodes de classification supervisée dont il est question ici sont de différents types. Plus le nombre (de types) de méthodes de classification supervisée appliquées à cette étape est grand, et plus l'interprétation en électrofaciès obtenue à l'issue du procédé selon le premier aspect de l'invention est fiable.

Selon une mise en oeuvre de la première variante de l'invention selon laquelle l'étape 2 est mise en oeuvre au moyen d'une pluralité de méthodes de classification supervisée, les méthodes de classification supervisée mises en oeuvre à l'étape 4 peuvent être différentes de celles mises en oeuvre à l'étape 2 selon cette variante, ou bien être identiques. Dans tous les cas, le résultat sera différent puisque ces (première et deuxième) pluralités de méthodes de classification supervisée sont appliquées à partir d'une information d'apprentissage différente. Selon une mise en oeuvre de l'invention, on peut choisir au moins une des méthodes de classification supervisée appliquées au cours de cette étape parmi les méthodes suivantes : la classification et régression par arbre de décision (en anglais 'Classification and Regression Tree (CART)'), une classification de type forêt aléatoire (en anglais 'random forest') ou sa variante en calcul parallèle (en anglais `parallele random forest'), les machines à vecteur de support (en anglais 'support vector machine'), l'ensachage de modèles d'arbres décisionnels (en anglais 'Bagged CART'), l'analyse discriminante linéaire (en anglais 'Discriminant Analysis') ou sa variante appelée mélange d'analyses discriminantes (en anglais 'Mixture Discriminant Analysis'), la méthode des k plus proches voisins (en anglais 'k-nearest neighbors'). On peut trouver une description de ces méthodes par exemple dans le document (Gan et al., 2007).

De manière préférée, au cours de cette étape, on peut appliquer au moins une classification de type forêt d'arbres décisionnels aussi appelée forêt aléatoire (en anglais 'random decision forest' ou `random forest') et l'ensachage de modèles d'arbres décisionnels (en anglais 'Bagged CART'). Il s'agit en effet de deux méthodes qui s'avèrent parmi les plus performantes pour réaliser une classification supervisée, notamment de mesures diagraphiques et/ou d'images de carottes. On peut trouver une description de ces méthodes dans la section 2.1 ci-dessus.

Selon une mise en oeuvre de l'invention, on peut appliquer la pluralité de méthodes de classification supervisée en outre à une pluraité de mesures relatives à une autre portion du puits que celle utilisée pour appliquer les étapes 2 à 3 ci-dessus, ou encore à d'autres puits traversant la formation souterraine d'intérêt. De cette manière, on utilise l'apprentissage réalisé pour au moins une portion d'au moins un puits traversant la formation souterraine pour classifier en électrofaciès d'autres portions du puits ou encore d'autres puits pour lesquels on dispose de mesures. Il est bien clair que de bons résultats ne peuvent être obtenus pour cette mise en oeuvre de l'invention que si les échantillons, sélectionnés à l'étape 3 pour réaliser l'apprentissage de la deuxième pluralité de méthodes de classification supervisée à l'étape 4, sont suffisamment représentatifs des autres puits, ou des autres portions du même puits.

Ainsi, à l'issue de cette étape, on obtient une classe pour chacun des échantillons des mesures réalisées le long au moins d'une portion d'au moins un puits traversant la formation souterraine d'intérêt, et ce pour chacune des méthodes de classification supervisée appliquées aux mesures diagraphiques et/ou aux images de puits. Autrement dit, à l'issue de cette étape, on obtient une deuxième pluralité de classifications en électrofaciès, plus précisément, une classification en électrofaciès pour chaque méthode de de classification supervisée appliquée au moyen de l'information d'apprentissage déterminée de manière automatique à l'étape 3. On peut aussi parler de 'deuxième pluralité d'interprétations en électrofaciès intermédiaires'.

### 5. Détermination de l'interprétation en électrofaciès

Au cours de cette étape, on détermine une interprétation en électrofaciès représentative d'au moins la portion du au moins un puits à partir de la deuxième pluralité de classifications en électrofaciès de la pluralité de mesures réalisées pour au moins portion d'au moins un puits, la détermination étant réalisée au moyen d'une méthode d'apprentissage ensembliste. Autrement dit, on détermine ici l'interprétation en électrofaciès finale d'au moins la portion du au moins un puits, à partir de la deuxième pluralité d'interprétations en électrofaciès intermédiaires obtenue à l'étape 4, elle-même obtenue à partir de la première pluralité d'interprétations en électrofaciès intermédiaires obtenue à l'étape 2.

De manière générale, les méthodes d'apprentissage ensembliste (en anglais 'Ensemble learning methods') sont classiquement utilisées pour obtenir de meilleures performances prédictives, en associant plusieurs algorithmes d'apprentissage. De manière générale, une méthode de classification ensembliste permet de construire une classification de 'synthèse', qui prend en quelque sorte le meilleur de chacune des classifications. On parle aussi de 'consensus de classification'.

Selon une mise en oeuvre de l'invention, on choisit une méthode d'apprentissage ensembliste parmi les méthodes suivantes : la méthode du vote majoritaire (en anglais 'Major Voting'), le renforcement d'apprentissage (en anglais `boosting'), l'agrégation ou ensachage de modèles (en anglais `bootstrap aggregating'), la classification optimale de Bayes (en anglais 'Bayes optimal classifier'), l'empilement (en anglais 'stacking'), ou encore le seau de modèles (en anglais 'bucket of models'). On peut trouver une description de ces méthodes par exemple dans le document (Seni et Eleder, 2010).

Avantageusement, on peut déterminer en outre des incertitudes associées à chacun des échantillons de l'interprétation en électrofaciès déterminée à cette étape. On parle aussi de probabilité d'appartenance à une classe (qui est alors l'inverse de l'incertitude). La détermination des incertitudes associée à une interprétation en électrofaciès peut permettre de mettre en évidence des portions de l'interprétation en électrofaciès pour lesquelles un contrôle a posteriori n'est pas indispensable (portions pour lesquelles les incertitudes sont faibles, par exemple inférieures à 0.5), et inversement, de mettre en évidence les portions de l'interprétation en électrofaciès pour lesquelles une révision ou au moins un contrôle (par toute méthode automatique ou par l'intervention d'un expert) de l'interprétation est recommandée (portions pour lesquelles les incertitudes sont fortes, par exemple supérieures à 0.5). Par exemple, on peut envisager qu'une information d'apprentissage soit construite, à partir de ladite interprétation en électrofaciès finale corrigée par une interprétation manuelle réalisée par un spécialiste au moins dans les portions de l'interprétation en électrofaciès pour lesquelles les incertitudes sont fortes, avant de relancer au moins au moins une méthode de classification supervisée. On peut trouver une description de méthodes pour déterminer les incertitudes associées à une classification issue d'une méthode de classification ensembliste par exemple dans le document (Niculescu-Mizil & Caruana, 2005).

Selon une mise en oeuvre de l'invention, on peut utiliser la méthode du vote majoritaire comme méthode d'apprentissage ensembliste. Cette méthode présente l'avantage d'être simple de mise oeuvre. Cette méthode procède échantillon par échantillon et consiste, pour un échantillon donné, à sélectionner, parmi l'ensemble des classes prédites par chacune des méthodes de classification, la classe qui est majoritaire. Cette méthode procédant échantillon par échantillon, elle présente en outre l'avantage une détermination directe des échantillons pour lesquels l'incertitude est faible (si un grand nombre de méthodes de classification ont prédit la même classe) et inversement les échantillons pour lesquels l'incertitude est forte (si un grand nombre de méthodes de classification prédisent des classes différentes).

Ainsi, à l'issue de cette dernière étape du procédé selon le premier aspect de l'invention, on obtient une interprétation en électrofaciès des mesures réalisées pour au moins une portion d'au moins un puits au moyen d'un procédé qui peut être entièrement automatisé (au moins au moyen de la première variante de l'étape 2). En particulier, le procédé selon l'invention permet de s'affranchir de la nécessité de disposer d'une interprétation en électrofaciès, réalisée manuellement par un expert ce qui est un processus long et fastidieux, pour entrainer des méthodes de classification automatiques.

En effet, le procédé selon l'invention permet de générer de manière automatique une information d'apprentissage, choisie parmi une pluralité de prédictions, sur la base de critères pouvant être géologiques. De plus, le procédé selon l'invention repose sur l'association de plusieurs algorithmes d'apprentissage pour obtenir de meilleures performances prédictives, ainsi qu'une potentielle quantification de la qualité de la prédiction.

### 6. Exploitation d'un fluide présent dans la formation souterraine

Cette étape est mise en oeuvre dans le cadre du procédé selon un deuxième aspect de l'invention, et qui concerne un procédé pour exploiter un fluide présent dans la formation souterraine étudiée. Le fluide d'intérêt peut comprendre des hydrocarbures, sous la forme d'une phase huile et/ou d'une phase gazeuse.

Au cours de cette étape du procédé selon le deuxième aspect de l'invention, à partir au moins de l'interprétation en électrofaciès d'au moins une portion d'au moins un puits déterminée à l'issue de l'étape précédente, on exploite un fluide contenu dans la formation souterraine.

Selon une mise en oeuvre de l'invention, à partir au moins de l'interprétation en électrofaciès d'au moins une portion d'au moins un puits, on peut déterminer une représentation maillée représentative de la formation souterraine d'intérêt et on peut déterminer au moins un schéma d'exploitation du fluide contenu dans la formation souterraine à partir de cette représentation maillée, puis on exploite le fluide d'intérêt en fonction du schéma d'exploitation.

De manière classique, une représentation maillée représentative d'une formation souterraine d'intérêt est construite, comme selon l'invention, à partir au moins de l'interprétation en électrofaciès d'au moins une portion d'au moins un puits, mais est avantageusement construite également à partir de mesures réalisées sur des échantillons de roche prélevés dans les puits, d'informations déduites de campagnes d'acquisition sismique, de données de production comme les débits d'huile, d'eau, les variations de pression etc. L'homme du métier a parfaite connaissance de méthodes pour construire une représentation maillée représentative d'une formation souterraine.

On décrit ci-après de manière non limitative une mise en oeuvre particulière de l'invention selon laquelle le fluide comprend des hydrocarbures. De manière générale en exploitation pétrolière, un schéma d'exploitation comprend un nombre, une géométrie et une implantation (position et espacement) des puits injecteurs et producteurs à forer dans le réservoir étudié et à équiper. Un schéma d'exploitation peut en outre comprendre un type de récupération assistée des hydrocarbures contenus dans le réservoir, telle qu'une récupération au moyen de l'injection d'une solution comprenant un ou des polymères, de la mousse de CO₂, etc). Un schéma d'exploitation d'un réservoir d'hydrocarbures optimal doit par exemple permettre un fort taux de récupération des hydrocarbures piégés dans le réservoir géologique, sur une longue durée d'exploitation, et nécessitant un nombre de puits limité. Autrement dit, le spécialiste prédéfinit des critères d'évaluation selon lesquels un schéma d'exploitation du fluide d'un réservoir géologique est considéré comme suffisamment performant pour être mis en oeuvre sur le réservoir géologique étudié.

Selon une mise en oeuvre de l'invention, la détermination d'un schéma d'exploitation des hydrocarbures du réservoir géologique étudié peut être réalisée à l'aide d'un simulateur d'écoulement (ou simulateur de réservoir). Un exemple de simulateur de réservoir est le simulateur PumaFlow^{®} (IFP Energies nouvelles, France). De manière générale, à tout instant t de la simulation, un simulateur d'écoulement résout l'ensemble des équations d'écoulement propres à chaque maille et délivre des valeurs solutions des inconnues (saturations, pressions, concentrations, température,...) prédites à cet instant t. De cette résolution, découle la connaissance des quantités d'huile produites et de l'état du gisement (distribution des pressions, saturations, etc...) à l'instant considéré. Au moyen d'une représentation maillée, déterminée à partir au moins d'une interprétation en électrofaciès pour au moins une portion d'au moins un puits, le simulateur d'écoulement permet de prédire de manière fiable les productions notamment d'huile et de gaz pour un schéma d'exploitation donné.

Selon un mode de mise en oeuvre de l'invention, on peut définir différents schémas d'exploitation du fluide contenu dans le réservoir géologique étudié et on estime, à l'aide du simulateur d'écoulement, au moins un critère, tel que la quantité d'hydrocarbures produit selon chacun des différents schémas d'exploitation, la courbe représentative de l'évolution de la production dans le temps au niveau de chacun des puits, le rapport huile sur gaz (GOR) etc. Le schéma selon lequel les hydrocarbures contenus dans le réservoir sont réellement exploités peut alors correspondre à celui satisfaisant au moins un des critères d'évaluation des différents schémas d'exploitation. Selon l'invention, on réalise une pluralité de simulations d'écoulement pour une pluralité d'implantations de puits injecteurs-producteurs, au moyen du simulateur selon l'invention et au moyen d'une représentation maillée déterminée à partir au moins d'une interprétation en électrofaciès pour au moins une portion d'au moins un puits, et on détermine le schéma d'exploitation selon lequel exploiter le fluide du réservoir géologique pour chacune des implantations et on sélectionne l'implantation satisfaisant au moins un des critères d'évaluation prédéfinis. Avantageusement, on peut en outre réaliser une pluralité de simulations d'écoulement pour une pluralité de type de récupération assistée, au moyen du simulateur selon l'invention et d'une représentation maillée déterminée à partir au moins d'une interprétation en électrofaciès d'au moins une portion d'au moins un puits, et on détermine le schéma d'exploitation selon lequel exploiter le fluide du réservoir géologique pour chacune des types de récupération assistée, et on sélectionne la récupération assistée satisfaisant au moins un des critères d'évaluation prédéfinis.

Puis, une fois le schéma d'exploitation déterminé, les hydrocarbures piégés dans le réservoir pétrolier sont exploités en fonction de ce schéma d'exploitation, notamment au moins en forant les puits injecteurs et producteurs du schéma d'exploitation ainsi déterminés, de manière à produire les hydrocarbures, et en installant les infrastructures de production nécessaires au développement de ce gisement. Dans le cas où le schéma d'exploitation a en outre été déterminé en estimant la production du réservoir associée à différents types de récupération assisté, on injecte dans le puis injecteur le ou les types d'additifs (polymère, tensio-actifs, mousse de CO₂) sélectionné tel que décrit ci-dessus.

Il est bien entendu que le schéma d'exploitation peut être évolutif sur la durée d'une exploitation des hydrocarbures d'un réservoir géologique, en fonction des connaissances relatives au réservoir acquises pendant l'exploitation, des améliorations dans les différents domaines techniques intervenant lors d'une exploitation d'un gisement d'hydrocarbures (améliorations dans le domaine du forage, de la récupération assistée par exemple).

### Exemple d'application

Les avantages du procédé selon l'invention sont présentés ci-après dans un exemple d'application.

Pour cet exemple d'application, on dispose de mesures diagraphiques réalisées dans une portion allant de 1800m à 3300 m de profondeur environ d'un puits vertical traversant une formation souterraine comprenant majoritairement des grés et des argiles, située dans l'offshore de l'Ouest de l'Australie. On peut trouver une description de ces mesures dans le document (Emelyanova et al., 2017).

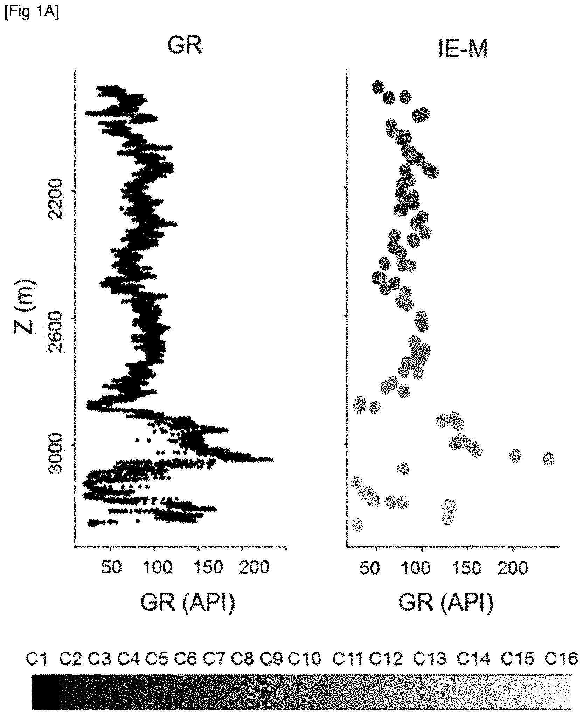

Les mesures diagraphiques dont on dispose sont de cinq types, à savoir une radioactivité naturelle en rayons gamma GR (pour 'gamma ray'), une diagraphie sonique, une diagraphie de densité, le neutron et des diagraphies électriques. La figure 1A à gauche montre à titre illustratif une diagraphie de radioactivité naturelle GR (en unités APl, classiques dans le domaine) évoluant en fonction de la profondeur Z.

Le procédé selon le premier aspect de l'invention est ici mis en oeuvre au moyen de la deuxième variante de l'étape 2, c'est-à-dire au moyen d'une pluralité de méthodes de classification non supervisée pour déterminer de manière automatique une information d'apprentissage, plus précisément 8 méthodes de classification non supervisée dans le cas d'espèce. Par ailleurs, le critère choisi pour sélectionner la classification en électrofaciès de référence est celui basé sur la classification présentant le plus faible nombre de changements de classe en fonction de la profondeur. De plus, 8 méthodes de classification supervisée ont été utilisées pour l'étape 5, avec la méthode du vote majoritaire pour comme méthode de classification ensembliste pour déterminer l'interprétation en électrofaciès finale.

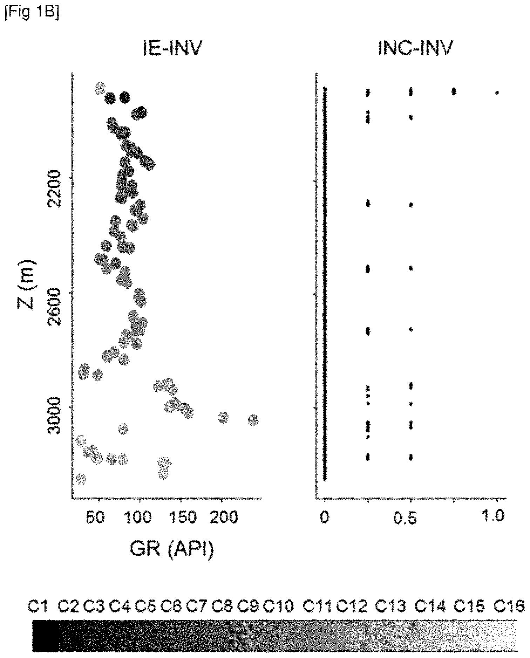

La figure 1B à gauche montre à titre illustratif l'interprétation en électrofaciès IE-INV résultant de la mise en oeuvre du procédé selon le premier aspect de l'invention. Plus précisément, pour cette figure, les classes déterminées par le procédé selon l'invention le long du puits (ici on ne présente que le résultat de l'interprétation pour un échantillon sur 10 le long du puits, à des fins de de visualisation) sont représentées par des couleurs variant sur une échelle de couleurs en niveaux de gris, et sont placées (à des fins d'illustration) sur l'axe des abscisses au niveau de la valeur correspondante de la diagraphie GR. On peut observer que l'interprétation en électrofaciès issue du procédé selon l'invention résulte en 16 classes distinctes, ici notées C1 à C16. On peut également observer que les classes ainsi déterminées par le procédé selon l'invention sont géologiquement plausibles, dans le sens où on peut constater une stabilité des classes avec la profondeur, malgré le caractère entièrement automatisé du procédé selon l'invention.

A titre de comparaison, la figure 1A à droite illustre (avec les mêmes conventions de représentation que pour la courbe IE-INV) une interprétation en électrofaciès IE-M réalisée manuellement par un expert géologue (ce qui est exceptionnel sur un si grand nombre de points de mesure). On peut observer une très bonne concordance entre l'interprétation en électrofaciès réalisée de manière entièrement automatisée par le procédé selon l'invention et l'interprétation manuelle. Pourtant l'interprétation en électrofaciès réalisée de manière entièrement automatisée par le procédé selon l'invention peut être obtenu en une dizaine de minutes sur un processeur de type Intel Xeon CPU E5-1620 v3 @ 3.50GHz alors que l'interprétation manuelle réalisée par l'expert peut prendre plusieurs jours.

La figure 1B à droite présente les incertitudes INC-INV comprises entre 0 (classification fiable) et 1 (classification non fiable) associées à l'interprétation en électrofaciès IE-INV obtenue par le procédé selon l'invention. On peut observer que les rares niveaux où la classification déduite par le procédé selon l'invention et celle de l'expert diffèrent, correspondent conventionnellement aux niveaux où l'incertitude associée est inférieure ou égale à 0.6, c'est-à-dire dans le cas d'une classification peu à non fiable. Ainsi, la détermination des incertitudes associées à l'interprétation en électrofaciès peut permettre de détecter les zones pour lesquelles l'apport d'un expert est recommandée voire indispensable. Par contre, pour les zones où les incertitudes sont faibles, cela peut signifier qu'il n'est pas nécessaire qu'un expert intervienne manuellement pour parfaire l'interprétation en électrofaciès déterminée de manière automatique par le procédé selon l'invention.

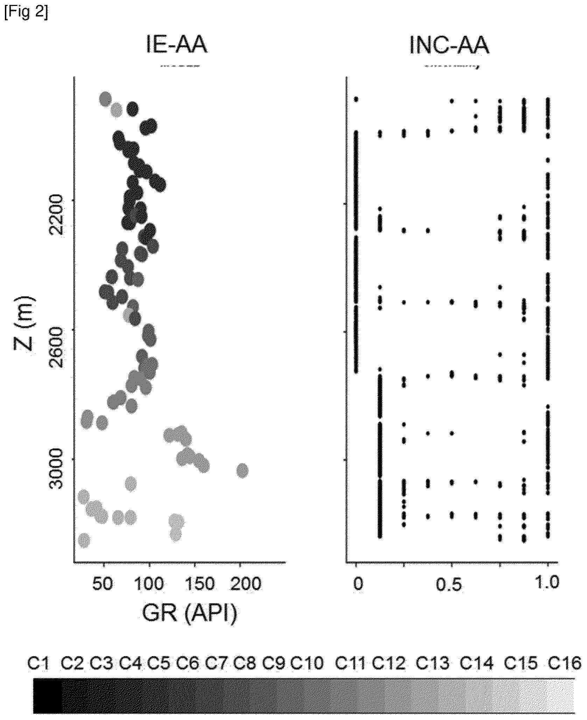

A titre de comparaison encore, la figure 2 à gauche illustre (avec les mêmes conventions de représentation que pour la courbe IE-INV) à gauche une interprétation en électrofaciès IE-AA déterminée par une méthode selon l'art antérieur, plus précisément la méthode de 'clustering' basée sur un mélange de modèles gaussiens (en anglais 'model-based clustering' ; cf. par exemple Fraley et Raftery 2002; Fraley et al. , 2012), ainsi que ses incertitudes INC-AA associées en figure 2 à droite. On peut observer une qualité légèrement moindre de la prédiction automatique du procédé selon l'art antérieur IE-AA comparée aux prédictions du procédé selon l'invention IE-INV, et surtout des incertitudes fortes associées à des zones pour lesquelles les incertitudes issues du procédé selon l'invention sont pourtant faibles.

Ainsi, le procédé selon l'invention permet d'obtenir une interprétation en électrofaciès fiable, de manière rapide, et pouvant être totalement automatisée. De plus le procédé selon l'invention peut permettre de déterminer des incertitudes permettant de mettre en évidence des zones pour lesquelles une interprétation ou au moins un contrôle manuel d'un expert est souhaitable.

## Revendications

1. Procédé pour déterminer une interprétation en électrofaciès de mesures relatives à au moins une portion d'au moins un puits traversant une formation souterraine comprenant les étapes suivantes :
A) on réalise une pluralité de mesures relatives à au moins ladite portion dudit au moins un puits traversant ladite formation souterraine, ladite pluralité desdites mesures résultant au moins d'une diagraphie de puits et/ou d'une image d'au moins une carotte prélevée dans ledit au moins un puits ;
B) on applique une première pluralité de méthodes de classification à ladite pluralité desdites mesures relatives à au moins ladite portion dudit au moins un puits et on détermine une première pluralité de classifications en électrofaciès de ladite pluralité desdites mesures relatives à au moins ladite portion dudit au moins puits, lesdites méthodes de classification étant des méthodes de classification non supervisée ou, si on dispose d'informations d'apprentissage pour au moins un sous-ensemble de ladite pluralité desdites mesures relatives à ladite au moins ladite portion dudit au moins un puits, des méthodes de classification supervisées entrainées sur lesdites informations d'apprentissage ;
C) parmi ladite première pluralité de classifications en électrofaciès de ladite pluralité desdites mesures relatives à au moins ladite portion dudit au moins puits, on sélectionne une classification en électrofaciès de référence selon un critère prédéfini, et on sélectionne une portion de ladite classification en électrofaciès de référence ; **caractérisé en ce que** le procédé comprend en plus les étapes suivantes :
D) on applique une deuxième pluralité de méthodes de classification à ladite pluralité desdites mesures relatives à au moins ladite portion dudit au moins un puits et on détermine une deuxième pluralité de classifications en électrofaciès de ladite pluralité desdites mesures relatives à au moins ladite portion dudit au moins puits, lesdites méthodes de classification étant des méthodes de classification supervisées entrainées sur ladite portion de ladite classification en électrofaciès de référence ;
E) on détermine ladite interprétation en électrofaciès de ladite pluralité desdites mesures relatives à au moins ladite portion dudit au moins un puits à partir de ladite deuxième pluralité de classifications en électrofaciès de ladite pluralité desdites mesures relatives à au moins ladite portion dudit au moins un puits, ladite détermination étant réalisée au moyen d'une méthode d'apprentissage ensembliste.

2. Procédé selon la revendication 1, dans lequel on choisit ladite au moins une diagraphie de puits parmi les diagraphies de rayons gamma, les diagraphies soniques, les diagraphies de densité, les diagraphies électriques ou encore les diagraphies d'imagerie du puits.

3. Procédé selon l'une des revendications précédentes, dans lequel ladite première pluralité de méthodes de classification non supervisée comprend au moins cinq types de méthodes de classification non supervisée, de préférence huit types méthodes de classification non supervisée.

4. Procédé selon l'une des revendications précédentes, dans lequel on choisit au moins une méthode de classification non supervisée de ladite première pluralité de méthodes de classification non supervisée parmi la liste suivante : la méthode de partitionnement des données basé sur des modèles, la méthode de partitionnement flou des données, la méthode de partitionnement hiérarchique en K-moyennes, la méthode de partitionnement des données basé sur la densité.

5. Procédé selon l'une des revendications précédentes, dans lequel ladite première et/ou deuxième pluralité de méthodes de classification supervisée comprend au moins cinq types méthodes de classification supervisée, de préférence huit types de méthodes de classification supervisée.

6. Procédé selon l'une des revendications précédentes, dans lequel on choisit au moins une méthode de classification supervisée de ladite première et/ou deuxième pluralité de méthodes de classification supervisée parmi la liste suivante : la classification et régression par arbre de décision, une classification de type forêt aléatoire, les machines à vecteur de support, l'ensachage de modèles d'arbres décisionnels, l'analyse discriminante linéaire, le mélange d'analyses discriminantes, la méthode des k plus proches voisins.

7. Procédé selon l'une des revendications précédentes, dans lequel ladite sélection de ladite classification en électrofaciès de référence selon un critère prédéfini consiste à sélectionner ladite classification de ladite première pluralité de classifications en électrofaciès présentant au moins le moins de changements de classes le long d'au moins ladite portion dudit au moins un puits.

8. Procédé selon l'une des revendications précédentes, dans lequel, à l'étape A), on réalise une pluralité de mesures pour au moins un puits supplémentaire et/ou pour au moins une portion supplémentaire dudit puits, et dans lequel, on applique les étapes B) et C) uniquement à ladite portion dudit puits, et on applique les étapes D) et E) à ladite portion dudit puits ainsi qu'audit puits supplémentaire et/ou à ladite portion supplémentaire dudit puits.

9. Procédé selon l'une des revendications précédentes, dans lequel ladite portion de ladite classification en électrofaciès de référence comprend entre 20 et 30% des échantillons de ladite classification en électrofaciès de référence.

10. Procédé selon la revendication 9, dans lequel on sélectionne lesdits échantillons de ladite portion de ladite classification en électrofaciès de référence de manière aléatoire.

11. Procédé selon l'une des revendications précédentes, dans lequel ladite méthode d'apprentissage ensembliste est la méthode du vote majoritaire.

12. Procédé pour exploiter un fluide présent dans une formation souterraine, comprenant la mise en oeuvre du procédé pour déterminer une interprétation en électrofaciès de mesures relatives à au moins une portion d'au moins un puits traversant une formation souterraine selon l'une quelconque des revendications précédentes.

13. Procédé selon la revendication 12, dans lequel à partir au moins de ladite interprétation en électrofaciès des mesures relatives à au moins ladite portion d'au moins ledit puits traversant ladite formation souterraine, on construit une représentation maillée représentative de ladite formation souterraine, on détermine au moins un schéma d'exploitation dudit fluide présent dans ladite formation souterraine à partir au moins de de ladite représentation maillée représentative de ladite formation souterraine, et on exploite ledit fluide de ladite formation souterraine en fonction dudit schéma d'exploitation.

14. Procédé selon l'une des revendications 12 ou 13, dans lequel ledit schéma d'exploitation dudit fluide comprend au moins une implantation d'au moins un puits injecteur et/ou d'au moins un puits producteur, et dans lequel on fore lesdits puits de ladite implantation et on les équipe d'infrastructures de production.

## Patentansprüche

1. Verfahren zur Bestimmung einer Elektrofacies-Interpretation von Messungen bezüglich mindestens eines Abschnitts mindestens eines Bohrlochs, das eine unterirdische Formation durchquert, umfassend die folgenden Schritte:
A) Ausführen einer Vielzahl von Messungen bezüglich mindestens des Abschnitts des mindestens einen Bohrlochs, das die unterirdische Formation durchquert, wobei die Vielzahl der Messungen mindestens aus einem Bohrloch-Log und/oder aus einem Bild mindestens eines aus dem mindestens einen Bohrloch entnommenen Bohrkerns resultieren;
B) Anwenden einer ersten Vielzahl von Klassifikationsmethoden auf die Vielzahl der Messungen bezüglich mindestens des Abschnitts des mindestens einen Bohrlochs und Bestimmen einer ersten Vielzahl von Elektrofacies-Klassifikationen der Vielzahl der Messungen bezüglich mindestens des Abschnitts des mindestens einen Bohrlochs, wobei die Klassifikationsmethoden Methoden zur unüberwachten Klassifikation sind oder, wenn man über Lerninformationen für mindestens eine Teilmenge der Vielzahl der Messungen bezüglich mindestens des Abschnitts des mindestens einen Bohrlochs verfügt, überwachte Klassifikationsmethoden, die mit den Lerninformationen trainiert werden;
C) unter der ersten Vielzahl von Elektrofacies-Klassifikationen der Vielzahl der Messungen bezüglich mindestens des Abschnitts des mindestens einen Bohrlochs, Auswählen einer Referenz-Elektrofacies-Klassifikation gemäß einem vorgegebenen Kriterium und Auswählen eines Abschnitts der Referenz-Elektrofacies-Klassifikation; **dadurch gekennzeichnet, dass** das Verfahren ferner die folgenden Schritte umfasst:
D) Anwenden einer zweiten Vielzahl von Klassifikationsmethoden auf die Vielzahl der Messungen bezüglich mindestens des Abschnitts des mindestens einen Bohrlochs und Bestimmen einer zweiten Vielzahl von Elektrofacies-Klassifikationen der Vielzahl der Messungen bezüglich mindestens des Abschnitts des mindestens einen Bohrlochs, wobei die Klassifikationsmethoden überwachte Klassifikationsmethoden sind, die auf den Abschnitt der Referenz-Elektrofacies-Klassifikation trainiert werden;
E) Bestimmen der Elektrofacies-Interpretation der Vielzahl der Messungen bezüglich mindestens des Abschnitts des mindestens einen Bohrlochs ausgehend von der zweiten Vielzahl von Elektrofacies-Klassifikationen der Vielzahl der Messungen bezüglich mindestens des Abschnitts des mindestens einen Bohrlochs, wobei das Bestimmen mittels einer Ensemble-Lernmethode durchgeführt wird.

2. Verfahren nach Anspruch 1, wobei das mindestens eine Bohrloch-Log unter den Gammastrahlen-Logs, den akustischen Logs, den Dichte-Logs, den elektrischen Logs oder aber den Bildgebungs-Logs des Bohrlochs ausgewählt wird.

3. Verfahren nach einem der vorhergehenden Ansprüche, wobei die erste Vielzahl von Methoden zur unüberwachten Klassifikation mindestens fünf Arten von Methoden zur unüberwachten Klassifikation umfasst, bevorzugt acht Arten von Methoden zur unüberwachten Klassifikation.

4. Verfahren nach einem der vorhergehenden Ansprüche, wobei mindestens eine Methode zur unüberwachten Klassifikation der ersten Vielzahl von Methoden zur unüberwachten Klassifikation aus der folgenden Liste ausgewählt wird: der Methode zur modellbasierten Partitionierung der Daten, der Methode zur unscharfen Partitionierung der Daten, der Methode zur hierarchischen K-Mittelwert-Partitionierung, der Methode zur dichtebasierten Partitionierung der Daten.

5. Verfahren nach einem der vorhergehenden Ansprüche, wobei die erste und/oder zweite Vielzahl von Methoden zur überwachten Klassifikation mindestens fünf Arten von Methoden zur überwachten Klassifikation umfasst, bevorzugt acht Arten von Methoden zur überwachten Klassifikation.

6. Verfahren nach einem der vorhergehenden Ansprüche, wobei mindestens eine Methode zur überwachten Klassifikation der ersten und/oder zweiten Vielzahl von Methoden zur überwachten Klassifikation aus der folgenden Liste ausgewählt wird: der Entscheidungsbaum-Klassifikation und -Regression, einer Random-Forest-Klassifikation, den Support Vector Machines, dem Bagging von Entscheidungsbaummodellen, der linearen Diskriminanzanalyse, der Mischung von Diskriminanzanalysen, der Methode der k nächsten Nachbarn.

7. Verfahren nach einem der vorhergehenden Ansprüche, wobei das Auswählen der Referenz-Elektrofacies-Klassifikation nach einem vorgegebenen Kriterium darin besteht, die Klassifikation der ersten Vielzahl von Elektrofacies-Klassifikationen auszuwählen, die mindestens am wenigsten Klassenänderungen entlang mindestens des Abschnitts des mindestens einen Bohrlochs aufweist.

8. Verfahren nach einem der vorhergehenden Ansprüche, wobei im Schritt A) eine Vielzahl von Messungen für mindestens ein zusätzliches Bohrloch und/oder für mindestens einen zusätzlichen Abschnitt des Bohrlochs durchgeführt wird und wobei die Schritte B) und C) nur auf den Abschnitt des Bohrlochs angewandt werden und die Schritte D) und E) auf den Abschnitt des Bohrlochs sowie auf das zusätzliche Bohrloch und/oder auf den zusätzlichen Abschnitt des Bohrlochs angewandt werden.

9. Verfahren nach einem der vorhergehenden Ansprüche, wobei der Abschnitt der Referenz-Elektrofacies-Klassifikation zwischen 20 und 30 % der Proben der Referenz-Elektrofacies-Klassifikation umfasst.

10. Verfahren nach Anspruch 9, wobei die Proben des Abschnitts der Referenz-Elektrofacies-Klassifikation zufällig ausgewählt werden.

11. Verfahren nach einem der vorhergehenden Ansprüche, wobei die Ensemble-Lernmethode die Methode der Mehrheitsentscheidung ist.

12. Verfahren zum Fördern eines Fluids, das in einer unterirdischen Formation vorkommt, umfassend die Durchführung des Verfahrens zur Bestimmung einer Electrofacies-Interpretation von Messungen bezüglich mindestens eines Abschnitts mindestens eines Bohrlochs, das eine unterirdische Formation durchquert, nach einem der vorhergehenden Ansprüche.

13. Verfahren nach Anspruch 12, wobei ausgehend mindestens von der Elektrofacies-Interpretation der Messungen bezüglich mindestens des Abschnitts mindestens des Bohrlochs, das die unterirdische Formation durchquert, eine für die unterirdische Formation repräsentative Netzdarstellung erstellt wird, mindestens ein Förderschema für das in der unterirdischen Formation vorkommende Fluid ausgehend mindestens von der für die unterirdische Formation repräsentativen Netzdarstellung bestimmt wird und das Fluid der unterirdischen Formation in Abhängigkeit von dem Förderschema gefördert wird.

14. Verfahren nach einem der Ansprüche 12 oder 13, wobei das Förderschema für das Fluid mindestens eine Anordnung mindestens eines Injektionsbohrlochs und/oder mindestens eines Produktionsbohrlochs umfasst und wobei die Bohrlöcher der Anordnung gebohrt werden und mit Produktionsinfrastruktur ausgestattet werden.

## Claims

1. Method for determining an electrofacies interpretation of measurements relative to at least one portion of at least one well drilled through an underground formation, comprising the following steps:
A) carrying out a plurality of measurements relative to at least said portion of said at least one well drilled through said underground formation, said plurality of said measurements resulting at least from a well log and/or an image of at least one core sample taken in said at least one well;
B) applying a first plurality of classification methods to said plurality of said measurements relative to at least said portion of said at least one well and determining a first plurality of electrofacies classifications of said plurality of said measurements relative to at least said portion of said at least one well, said classification methods being unsupervised classification methods, or, if learning information is available for at least one subset of said plurality of said measurements relative to at least said portion of said at least one well, supervised classification methods trained on said learning information;
C) among said first plurality of electrofacies classifications of said plurality of said measurements relative to at least said portion of said at least one well, selecting a reference electrofacies classification according to a predefined criterion, and selecting a portion of said reference electrofacies classification; **characterized in that** the method in addition comprises the following steps:
D) applying a second plurality of classification methods to said plurality of said measurements relative to at least said portion of said at least one well and determining a second plurality of electrofacies classifications of said plurality of said measurements relative to at least said portion of said at least one well, said classification methods being supervised classification methods trained on said portion of said reference electrofacies classification;
E) determining said electrofacies interpretation of said plurality of said measurements relative to at least said portion of said at least one well from said second plurality of electrofacies classifications of said plurality of said measurements relative to at least said portion of said at least one well, said determining step being performed using an ensemble learning method.

2. Method according to Claim 1, wherein said at least one well log is selected from gamma-ray logs, sonic logs, density logs, electric logs or even well-image logs.

3. Method according to either one of the preceding claims, wherein said first plurality of unsupervised classification methods comprises at least five types of unsupervised classification methods, and preferably eight types of unsupervised classification methods.

4. Method according to any one of the preceding claims, wherein at least one unsupervised classification method of said first plurality of unsupervised classification methods is selected from the following list: model-based clustering, fuzzy clustering, hierarchical k-means clustering, density-based clustering.

5. Method according to any one of the preceding claims, wherein said first and/or second plurality of supervised classification methods comprises at least five types of supervised classification methods, and preferably eight types of supervised classification methods.

6. Method according to any one of the preceding claims, wherein at least one supervised classification method of said first and/or second plurality of supervised classification methods is selected from the following list: a classification and regression tree, random-forest classification, a support vector machine, a bagged classification and regression tree, discriminant analysis, mixture of discriminant analyses, the k-nearest neighbours method.

7. Method according to any one of the preceding claims, wherein said step of selecting said reference electrofacies classification according to a predefined criterion consists in selecting said classification of said first plurality of electrofacies classifications exhibiting at least the least class changes along at least said portion of said at least one well.

8. Method according to any one of the preceding claims, wherein, in step A), a plurality of measurements is carried out for at least one additional well and/or for at least one additional portion of said well, and wherein steps B) and C) are applied only to said portion of said well, and steps D) and E) are applied to said portion of said well, and to said additional well and/or to said additional portion of said well.

9. Method according to any one of the preceding claims, wherein said portion of said reference electrofacies classification comprises between 20% and 30% of the samples of said reference electrofacies classification.

10. Method according to Claim 9, wherein said samples of said portion of said reference electrofacies classification are randomly selected.

11. Method according to any one of the preceding claims, wherein said ensemble learning method is the majority voting method.

12. Method for extracting a fluid present in an underground formation, comprising implementing the method for determining an electrofacies interpretation of measurements relative to at least one portion of at least one well drilled through an underground formation according to any one of the preceding claims.

13. Method according to Claim 12, wherein, on the basis of at least said electrofacies interpretation of measurements relative to at least said portion of at least said well drilled through said underground formation, a mesh representation representative of said underground formation is constructed, at least one scheme for extracting said fluid present in said underground formation is determined on the basis at least of said mesh representation representative of said underground formation, and said fluid is extracted from said underground formation according to said extracting scheme.

14. Method according to either one of Claims 12 and 13, wherein said scheme for extracting said fluid comprises at least one site for at least one injection well and/or at least one production well, and wherein said wells of said site are drilled and equipped with production infrastructure.
